# FASCICULE DE BREVET EUROPEEN

(11) **EP 0 931 711 B1**
(45) Date de publication et mention de la délivrance du brevet: **17.04.2002**
(21) Numéro de dépôt: 99400171.7
(22) Date de dépôt: 25.01.1999
(51) Int. Cl.: B62D 1/16, B62D 1/10

(54) **Système de direction pour véhicule automobile**
Kraftfahrzeug-Lenksystem
Steering system for a motor vehicle

(30) Priorité: 26.01.1998 FR 9800802
(43) Date de publication de la demande: 28.07.1999
(73) Titulaire: ECIA - EQUIPEMENTS ET COMPOSANTS POUR L'INDUSTRIE AUTOMOBILE, F-25400 Audincourt (FR)
(72) Inventeur: Hoblingre, André, 90380 Roppe (FR); Mouhot, Frédéric, 25420 Voujeaucourt (FR)
(74) Mandataire: Habasque, Etienne Joel Jean-François

(56) Documents cités:
- EP-A- 0 825 089
- DE-A- 2 213 284
- PATENT ABSTRACTS OF JAPAN vol. 013, no. 411 (M-869), 11 septembre 1989 -& JP 01 148640 A (MAZDA MOTOR CORP), 12 juin 1989

## Description

La présente invention concerne un système de direction pour véhicule automobile.

Plus particulièrement, l'invention se rapporte à un tel système qui comporte un volant de direction dont le coussin central et désolidarisé en rotation du reste de celui-ci et un ensemble de colonne de direction comportant un arbre de direction formé d'au moins deux tronçons d'arbre dont au moins un premier est tubulaire et est adapté pour porter le reste du volant de direction et dans lequel est prévue une pièce de support du coussin, fixe en rotation, dont une première extrémité est adaptée pour recevoir le coussin et dont une seconde extrémité est adaptée pour déboucher au niveau de moyens d'accouplement des premier et second tronçons d'arbre de direction.

Les systèmes de direction de ce type, c'est-à-dire dans lesquels le coussin central du volant est fixe en position, par rapport au reste du volant, ont été développés pour optimiser la sécurité à bord des véhicules et faciliter le raccordement d'organes portés par le coussin central du volant au reste des circuits du véhicule. Un système de ce type est décrit dans JP01148640. Il sert de base pour la présentation en deux parties de la revendication 1.

En particulier un tel coussin de volant de direction est par exemple équipé d'un module à sac gonflable et le fait que celui-ci demeure fixe en position, indépendamment de la rotation du volant, permet de le maintenir dans une position déterminée de déploiement afin d'optimiser la protection du conducteur du véhicule lors d'un choc.

Cependant, tous les systèmes de ce type développés dans l'état de la technique présentent un certain nombre d'inconvénients, notamment au niveau de leur structure relativement complexe et encombrante.

Le but de l'invention est donc de résoudre ces problèmes.

A cet effet, l'invention a pour objet un système de direction pour véhicule automobile selon la revendication 1.

Avantageusement, le second mécanisme de renvoi est également à conservation de sens de rotation et peut par exemple comporter un mécanisme d'articulation à la cardan ou un second train d'engrenage à pignons coniques.

L'invention sera mieux comprise à l'aide de la description qui va suivre, donnée uniquement à titre d'exemple et faite en se référant aux dessins annexés, sur lesquels :
- la Fig.1 représente une vue en coupe schématique illustrant un premier exemple de réalisation d'un système de direction selon l'invention; et
- la Fig.2 représente une vue schématique en coupe d'un second exemple de réalisation d'un système de direction selon l'invention.

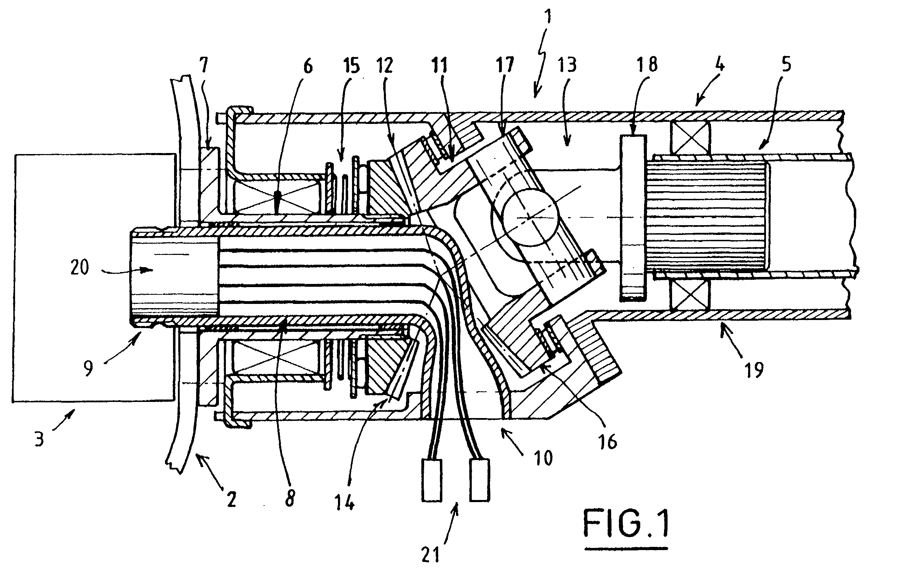

On reconnaît en effet sur la figure 1, un système de direction pour véhicule automobile, qui est désigné par la référence générale 1.

Ce système de direction comporte un volant de direction désigné par la référence générale 2 représenté de façon schématique sur cette figure, dont le coussin central 3 également représenté de façon schématique, est désolidarisé en rotation du reste de celui-ci et un ensemble de colonne de direction désigné par la référence générale 4.

Cet ensemble de colonne de direction comporte un arbre de direction formé d'au moins deux tronçons d'arbre non coaxiaux désignés par les références générales 5 et 6 sur cette figure 1, distants l'un de l'autre et par exemple parallèles.

Le premier tronçon d'arbre 6 est tubulaire et est adapté pour porter le reste du volant de direction 2.

En effet, le premier tronçon d'arbre 6 présente à l'une de ses extrémités, une zone 7 de fixation du reste du volant de direction, de façon classique.

De plus, une pièce de support du coussin désignée par la référence générale 8 sur cette figure, est prévue dans le premier tronçon d'arbre de direction 6 et cette pièce de support est fixe en rotation par rapport à l'ensemble de colonne, de façon classique.

Une première extrémité 9 de cette pièce de support 8 est adaptée pour recevoir le coussin central 3 du volant de direction, et fait donc saillie par exemple au-delà de la zone correspondante 7 du tronçon d'arbre de direction 6, pour permettre la fixation du coussin central 3 sur celle-ci, de toute manière appropriée.

La seconde extrémité de cette pièce de support 8 désignée par la référence générale 10 sur cette figure, est adaptée pour déboucher au niveau de moyens d'accouplement des premier et second tronçons d'arbre de direction 5 et 6, ces moyens d'accouplement étant désignés par la référence générale 11 sur cette figure.

Ces moyens d'accouplement seront décrits plus en détail par la suite.

Le second tronçon d'arbre de direction 5 peut également être tubulaire et est relié au reste du mécanisme de direction du véhicule de façon classique.

Les moyens d'accouplement 11 des deux tronçons d'arbre 5 et 6 comportent selon l'invention, deux mécanismes de renvoi d'angle désignés par les références générales 12 et 13 sur cette figure 1, reliés l'un à l'autre et un premier 12, au premier tronçon d'arbre 6 et un second 13, au second tronçon d'arbre 5.

Le premier mécanisme de renvoi d'angle 12 comporte un train d'engrenage à pignons coniques à conservation de sens de rotation, entre lesquels débouche la seconde extrémité 10 de la pièce de support 8 du coussin central 3 du volant.

C'est ainsi par exemple que l'extrémité correspondante du premier tronçon d'arbre de direction 6 porte un premier pignon conique 14 bloqué en rotation sur celui-ci par exemple par l'intermédiaire de cannelures complémentaires, monté à coulissement axial sur ce tronçon d'arbre 6 et associé à des moyens élastiques 15, comportant par exemple un ressort disposé autour du tronçon d'arbre 6, pour plaquer ce pignon 14 contre un second pignon complémentaire 16 de ce premier mécanisme de renvoi d'angle 12 afin d'obtenir une transmission de rotation sans jeu.

Le second mécanisme de renvoi désigné par la référence générale 13 est également un mécanisme de renvoi à conservation de sens de rotation, sans jeu.

Dans l'exemple décrit sur cette figure 1, ce second mécanisme de renvoi d'angle 13 comporte un mécanisme d'articulation à la cardan, dont une première portion 17 est reliée au premier mécanisme de renvoi d'angle 12 et plus particulièrement au second pignon conique 16 de celui-ci, et dont une seconde partie 18 est reliée au second tronçon d'arbre 5.

Cette seconde partie 18 de ce second mécanisme de renvoi peut par exemple être venue de matière avec le tronçon d'arbre correspondant 5 ou être réalisée de façon indépendante de celui-ci, sous la forme par exemple d'un organe dont une portion est accouplée au moins en rotation par engagement sans jeu dans ce tronçon d'arbre.

Des moyens de guidage notamment en rotation sont également prévus dans cet ensemble de colonne pour assurer un guidage correct de ces différentes pièces.

Ces moyens de guidage présentant n'importe quelle structure appropriée, on ne les décrira pas plus en détail par la suite.

On conçoit alors que lorsque le conducteur du véhicule tourne le volant 2 de celui-ci, il entraîne en rotation le premier tronçon d'arbre 6, de manière à entraîner en rotation le premier pignon conique 14 du premier mécanisme de renvoi d'angle 12. Ce premier pignon 14 entraîne alors en rotation le second pignon conique complémentaire 16 qui lui-même entraîne en rotation le mécanisme d'articulation à la cardan 13 et fait tourner le second tronçon d'arbre 5 afin de piloter le reste du mécanisme de direction du véhicule.

Comme on l'a indiqué précédemment, le coussin central 3 du volant est fixe en position dans la mesure où il est porté par la pièce de support 8 disposée dans le premier tronçon d'arbre de direction 6 et qui est elle-même fixe en position par rapport à l'ensemble de colonne.

Des moyens de reprise des efforts permettant de maintenir cette pièce de support en position sont également prévus et peuvent présenter n'importe quelle structure appropriée, de sorte que l'on ne les décrira pas plus en détail par la suite.

On notera simplement que l'extrémité 10 de cette pièce de support 8 adaptée pour déboucher entre les pignons coniques du premier mécanisme de renvoi d'angle 12, peut être coudée et s'engager dans un évidement correspondant d'un boîtier de réception 19 du système de direction.

Cette pièce de support 8 peut alors également être un pièce de support tubulaire dans laquelle sont disposés des moyens de raccordement d'organes portés par le coussin central, tels que par exemple un module à sac gonflable ou des moyens de commande d'organes fonctionnels du véhicule, au reste des circuits de ce véhicule.

C'est ainsi par exemple que cette pièce de support 8 peut comporter à l'une de ses extrémités, un connecteur 20 adapté par exemple pour coopérer avec un connecteur complémentaire du coussin central du volant de direction afin de permettre le raccordement des organes portés par ce coussin central au reste des circuits du véhicule, par exemple par l'intermédiaire de conducteurs électriques, désignés par la référence générale 21 sur cette figure.

Il va de soi bien entendu que différents modes de réalisation de ces moyens de raccordement peuvent être envisagés.

On conçoit alors qu'un tel système présente une structure relativement simple et peu encombrante en raison de l'utilisation de moyens particuliers d'accouplement des tronçons d'arbre.

Par ailleurs, l'intégration d'un train d'engrenage à pignons coniques permet d'avoir accès à la pièce de support du coussin central du volant et d'intégrer très facilement dans celle-ci, des moyens de raccordement des organes portés par le coussin au reste des circuits du véhicule, comme par exemple un module à sac gonflable et des moyens de commande d'organes fonctionnels du véhicule.

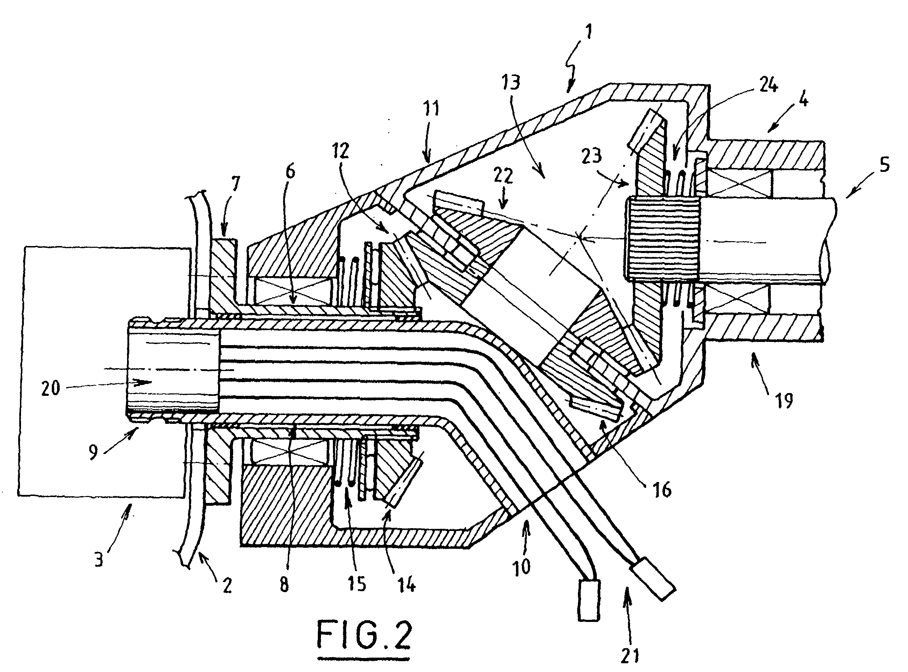

Il va de soi bien entendu que d'autres modes de réalisation de ce système peuvent être envisagés comme celui représenté sur la figure 2.

Sur cette figure, des numéros de référence identiques désignent des pièces identiques ou analogues à celles décrites en regard de la figure 1.

C'est ainsi que l'on reconnaît sur cette figure 2, le système de direction 1, le volant de direction 2, le coussin central 3, l'ensemble de colonne de direction 4, les tronçons d'arbre de direction 5 et 6, la zone 7 du premier tronçon d'arbre 6 adaptée pour la fixation du volant de direction, la pièce de support 8 du coussin central 3 à son extrémité 9, l'extrémité 10 de celle-ci débouchant au niveau des moyens d'accouplement 11 des premier et second tronçons d'arbre 5 et 6, ces moyens d'accouplement comportant toujours le train d'engrenage à pignons coniques 12 à conservation de sens de rotation, associé au second mécanisme de renvoi 13.

Dans l'exemple décrit en regard de cette figure 2, le second mécanisme de renvoi 13 comporte un second train d'engrenage à pignons coniques.

En effet, dans cet exemple de réalisation, ce second mécanisme de renvoi d'angle 13 comporte un troisième pignon conique désigné par la référence générale 22 sur cette figure, qui est relié au second pignon conique 16 du premier mécanisme de renvoi 12 et qui est adapté pour coopérer avec un quatrième pignon conique 23 du second mécanisme de renvoi 13.

Le quatrième pignon conique 23 est porté par et lié en rotation au second tronçon d'arbre de direction 5, est monté à coulissement axial sur celui-ci par exemple par l'intermédiaire de cannelures complémentaires et est associé à des moyens élastiques 24 pour le solliciter en appui contre le troisième pignon conique 22.

Ceci permet également comme dans le cas du premier mécanisme de renvoi, d'assurer une transmission du mouvement de rotation sans jeu.

On conçoit alors que dans cet exemple de réalisation également, lorsque le conducteur du véhicule fait tourner le volant de direction 2, il entraîne en rotation le premier tronçon d'arbre 6. Celui-ci entraîne alors en rotation le premier pignon conique 14 du premier train d'engrenage qui coopère avec le second pignon conique 16 de ce train d'engrenage afin de le faire tourner.

Ce second pignon conique 16 du premier train d'engrenage 12 étant relié au troisième pignon conique 22 du second train d'engrenage 13, la rotation du volant de direction entraîne alors une rotation de ce troisième pignon conique 22 qui engrène avec le quatrième pignon conique 23 de ce second train d'engrenage 13, afin de faire tourner le second tronçon d'arbre de direction 5, pour piloter le reste du mécanisme de direction du véhicule.

Dans cet exemple de réalisation également, différents moyens de guidage notamment en rotation sont prévus entre le boîtier 19 et les différentes pièces en mouvement des mécanismes de renvoi.

C'est ainsi par exemple que différents paliers à aiguilles et différents roulements à billes peuvent être utilisés pour assurer ces guidages, de façon classique.

On conçoit alors que dans ce cas également, le système de direction présente un certain nombre d'avantages au niveau de sa structure relativement simple et de son encombrement réduit.

Bien entendu, d'autres modes de réalisation encore peuvent être envisagés.

Ainsi par exemple, des tronçons d'arbre non parallèles peuvent être envisagés.

De plus, le premier tronçon d'arbre peut également être réglable en position angulaire par pivotement autour de l'axe du mécanisme d'articulation à la cardan, pour permettre un réglage de la position angulaire du volant de façon classique.

## Revendications

1. Système de direction pour véhicule automobile, du type comportant un volant de direction (2) dont le coussin central (3) est désolidarisé en rotation du reste de celui-ci et un ensemble de colonne de direction (4) comportant un arbre de direction formé d'au moins deux tronçons d'arbre (5,6), dont au moins un premier (6) est tubulaire et est adapté pour porter le reste du volant de direction (2) et dans lequel est prévue une pièce de support (8) du coussin (3), fixe en rotation, dont une première extrémité (9) est adaptée pour recevoir le coussin (3) et dont une seconde extrémité (10) est adaptée pour déboucher au niveau de moyens d'accouplement (11) des premier (6) et second (5) tronçons d'arbre de direction, les moyens d'accouplement (11) des deux tronçons d'arbre comportant deux mécanismes de renvoi d'angle (12,13) reliés l'un à l'autre et un premier (12), au premier tronçon d'arbre (6) et un second (13), au second tronçon d'arbre (5), le premier mécanisme de renvoi d'angle (12) comportant un train d'engrenage à pignons coniques (14,16), entre lesquels débouche la seconde extrémité (10) de la pièce de support (8) du coussin central du volant, **caractérisé en ce que** ledit train d'engrenage à pignons coniques conserve le sens de rotation et **en ce que** lesdits deux tronçons d'arbres sont non coaxiaux.

2. Système selon la revendication 1, **caractérisé en ce que** le second mécanisme de renvoi (13) est également à conservation de sens de rotation.

3. Système selon la revendication 2, **caractérisé en ce que** le second mécanisme de renvoi d'angle (13) comporte un mécanisme d'articulation à la cardan (17,18).

4. Système selon la revendication 2, **caractérisé en ce que** le second mécanisme de renvoi d'angle (13) comporte un second train d'engrenage à pignons coniques (22,23).

5. Système selon l'une quelconque des revendications précédentes, **caractérisé en ce que** les pignons (14,16;22,23) du ou de chaque train d'engrenage (12,13) sont sollicités l'un en appui contre l'autre par des moyens élastiques (15;24).

6. Système selon la revendication 5, **caractérisé en ce que** le ou chaque train d'engrenage (12,13) à pignons coniques comporte un pignon conique (14;23) monté à coulissement axial sur le tronçon d'arbre correspondant (5,6) et associé aux moyens élastiques (15;24) pour le plaquer contre le pignon complémentaire (16;22) du train correspondant.

7. Système selon la revendication 5 ou 6, **caractérisé en ce que** les moyens élastiques comprennent un ressort (15;24) disposé autour du tronçon d'arbre correspondant.

8. Système selon l'une quelconque des revendications précédentes, **caractérisé en ce que** la pièce de support (8) comporte des moyens de raccordement (20,21) d'organes portés par le coussin central au reste des circuits du véhicule.

9. Système selon la revendication 8, **caractérisé en ce que** la pièce de support (8) comporte au moins un connecteur (20) associé à des conducteurs de raccordement (21).

10. Système selon l'une quelconque des revendications précédentes, **caractérisé en ce que** les deux tronçons d'arbre (5,6) sont parallèles.

## Claims

1. Motor vehicle steering system of the type comprising a steering wheel (2), the central pad (3) of which does not rotate integrally with the remainder of the steering wheel, and a steering column assembly (4) comprising a steering shaft formed of at least two shaft portions (5, 6), at least a first (6) of which is tubular and is designed to carry the remainder of the steering wheel (2) and in which there is provided a support piece (8) for the pad (3), fixed in terms of rotation, a first end (9) of which is designed to receive the pad (3), and a second end (10) of which is designed to open onto means (11) of coupling the first (6) and second (5) steering shaft portions, the means (11) of coupling the two shaft portions comprising two angular transmission mechanisms (12, 13) connected to one another and a first (12) of them connected to the first shaft portion (6) and a second (13) of them connected to the second shaft portion (5), the first angular transmission mechanism (12) comprising a bevel gearset (14, 16) between which the second end (10) of the support piece (8) for the central pad of the steering wheel emerges, **characterized in that** the said bevel gearset maintains the direction of rotation and **in that** the said two shaft portions are not coaxial.

2. System according to Claim 1, **characterized in that** the second transmission mechanism (13) also maintains the direction of rotation.

3. System according to Claim 2, **characterized in that** the second angular transmission mechanism (13) comprises a universal-type joint mechanism (17, 18).

4. System according to Claim 2, **characterized in that** the second angular transmission mechanism (13) comprises a second bevel gearset (22, 23).

5. System according to any one of the preceding claims, **characterized in that** the gears (14, 16; 22, 23) of the or of each gearset (12, 13) are pressed against one another by elastic means (15; 24).

6. System according to Claim 5, **characterized in that** the or each bevel gearset (12, 13) comprises a bevel gear (14; 23) mounted in axial sliding on the corresponding shaft portion (5, 6) and associated with the elastic means (15; 24) to press it against the complementary gear (16; 22) of the corresponding set.

7. System according to Claim 5 or 6, **characterized in that** the elastic means comprise a spring (15; 24) arranged around the corresponding shaft portion.

8. System according to any one of the preceding claims, **characterized in that** the support piece (8) comprises means (20, 21) for connecting members carried by the central pad to the remainder of the circuits of the vehicle.

9. System according to Claim 8, **characterized in that** the support piece (8) comprises at least one connector (20) associated with connecting conductors (21).

10. System according to any one of the preceding claims, **characterized in that** the two shaft portions (5, 6) are parallel.

## Patentansprüche

1. Kraftfahrzeug-Lenksystem mit einem Lenkrad (2), dessen zentrales Kissen (3) drehmäßig mit dem Rest des Lenkrades unverbunden ist, und einer Lenksäulenbaugruppe (4) mit einer aus zwei Wellenabschnitten (5, 6) gebildeten Lenkwelle, von der mindestens ein erster Abschnitt (6) rohrförmig ist und dazu ausgebildet ist, den Rest des Lenkrades (2) zu tragen, und in dem für das Kissen (3) ein drehfestes Tragteil (8) vorgesehen ist, von dem ein erstes Ende (9) dazu ausgebildet ist, das Kissen (3) aufzunehmen, und von dem zweites Ende (10) dazu ausgebildet ist, sich in Höhe von Kupplungsmitteln (11) zwischen dem ersten (6) und dem zweiten (5) Abschnitt der Lenkwelle zu öffnen, wobei die Kupplungsmittel (11) für die beiden Wellenabschnitte zwei Winkelübertragungsmechanismen (12, 13) aufweisen, die miteinander verbunden sind und von denen ein erster (12) mit dem ersten Wellenabschnitt (6) und ein zweiter (13) mit dem zweiten Wellenabschnitt (5) verbunden ist, wobei der erste Winkelübertragungsmechanismus (12) einen Getriebezug mit Kegelrädern (14, 16) aufweist, zwischen denen sich das zweite Ende (10) des Tragteils (8) für das zentrale Kissen des Lenkrads öffnet, **dadurch gekennzeichnet, daß** der genannte Kegelrad-Getriebezug den Drehsinn konserviert und daß die genannten beiden Wellenabschnitte nicht koaxial sind.

2. System nach Anspruch 1, **dadurch gekennzeichnet, daß** der zweite Winkelübertragungsmechanismus (13) ebenfalls den Drehsinn konserviert.

3. System nach Anspruch 2, **dadurch gekennzeichnet, daß** der zweite Winkelübertragungsmechanismus (13) ein Kardangelenk (17, 18) aufweist.

4. System nach Anspruch 2, **dadurch gekennzeichnet, daß** der zweite Winkelübertragungsmechanismus (13) einen zweiten Getriebezug mit Kegelrädern (22, 23) aufweist.

5. System nach einem der vorstehenden Ansprüche, **dadurch gekennzeichnet, daß** die Kegelräder (14, 16; 22, 23) des oder jedes Getriebezuges (12, 13) durch elastische Mittel (15; 24) in Anlage gegeneinander vorgespannt sind.

6. System nach Anspruch 5, **dadurch gekennzeichnet, daß** der oder jeder Kegelrad-Getriebezug (12, 13) ein Kegelrad (14; 23) aufweist, das axial verschiebbar auf dem zugehörigen Wellenabschnitt (5, 6) montiert den elastischen Mitteln (15, 24) zugeordnet ist, damit es gegen das komplementäre Kegelrad (16; 22) des betreffenden Getriebezuges angedrückt wird.

7. System nach Anspruch 5 oder 6, **dadurch gekennzeichnet, daß** die elastischen Mittel eine Feder (15, 24) aufweisen, die um den betreffenden Wellenabschnitt herum angeordnet ist.

8. System nach einem der vorstehenden Ansprüche, **dadurch gekennzeichnet, daß** das Tragteil (8) Mittel (20, 21) zur Verbindung von durch das zentrale Kissen gehaltenen Organen mit dem Rest der Schaltungen des Fahrzeugs aufweist.

9. System nach Anspruch 8, **dadurch gekennzeichnet, daß** das Tragteil (8) wenigstens einen Verbinder (20) aufweist, der Leitern der Verbindungsmittel (21) zugeordnet ist.

10. System nach einem der vorstehenden Ansprüche, **dadurch gekennzeichnet, daß** die beiden Wellenabschnitte (5, 6) parallel verlaufen.
